# EUROPÄISCHE PATENTSCHRIFT

(11) **EP 1 182 894 B1**
(45) Veröffentlichungstag und Bekanntmachung des Hinweises auf die Patenterteilung: **12.05.2004**
(21) Anmeldenummer: 01117576.7
(22) Anmeldetag: 20.07.2001
(51) Int. Cl.: H04Q 7/22, H04L 12/56

(54) **Optimierung der Bearbeitung und des Transports von Paketdaten für ein GSM/UMTS-Mobilfunksystem mit separierten Daten- und Signalisierungstransport**
Optimisation of packet data processing and transport for a GSM/UMTS mobile radio system with separated data and signalling transport
Optimisation du traitement et du transport de données en paquets pour un système radio mobile GSM/UMTS à transport séparé pour données et gestion

(30) Priorität: 21.08.2000 DE 10040793
(43) Veröffentlichungstag der Anmeldung: 27.02.2002
(73) Patentinhaber: SIEMENS AKTIENGESELLSCHAFT, 80333 München (DE)
(72) Erfinder: Mademann, Frank, Dr., 13189 Berlin (DE); Reulke, Norbert, Dr., 12489 Berlin (DE)

(56) Entgegenhaltungen:
- EP-A- 0 889 658
- 3GPP, TECHNICAL SPECIFICATION, GROUP SERVICES AND SYSTEM ASPECTS: "Feasability study for transport and control separation in th PS CN domain" , ETSI 3G TR 23.873 V1.0.0 XP002197378 * Seite 55 - Seite 79, Absätze 7,ALTERNATIVE,2,ONE,TUNNEL,APPROACH *
- ERICCSON: "Ericsson enables entry into the all-IP wireless network" 1. Februar 2000 (2000-02-01) , ERICSSON , PRESS RELEASE XP002197379 * Seite 4 - Seite 5 *
- IETF RFC 2805: "Media Gateway Control Protocol Architecture and Requirements" 1. April 2000 (2000-04-01) , IETF RFC 2805 , INTERNET DRAFT XP002197380 * Seite 3 - Seite 7 * * Seite 11, Absatz ACCOUNTING *
- P809-GI: "Mobility in the broadband environment based on IN evolution" Juni 1999 (1999-06) , EURESCOM XP002197381 * Abbildung 4.2 *
- GSM PHASE 2+ , UMTS : "GPRS Service description Stage 2 TS 23.060 v 3.4.0 Release 1999" , ETSI TS 123 060 V3.4.0 , INTERNET XP002197745 * das ganze Dokument *

## Beschreibung

"Optimierung der Paketdatenbearbeitung und des Paketdatentransportes für ein GSM/UMTS-Mobilfunk mit Radiosystemschnittstellen mit von der Signalisierung/Kontrolle separierten Datentransport"

Die Erfindung betrifft Verfahren und Vorrichtungen zum Übertragen von Sprachdaten oder Multimedia-Daten oder anderen Nutzdaten als Paketdaten in einem Mobilfunk-Telekommunikationsnetz.

Aus EP-A-0889658 ist ein Verfahren zum Übertragen von Sprachdaten oder Multimediadaten oder anderen Nutzdaten als Paketdaten in einem Mobilfunktelekommunikationsnetz MRN bekannt, in dem die Übertragung von Paketdaten zwischen zumindest einigen Komponenten BSS des Radiosubsystems des Mobiltelekommunikationsnetzes und zumindest einigen Festnetzschnittstellenknoten IPSW/GPR/GW des Mobiltelekommunikationsnetzes ohne Zwischenschaltung von zur Übermittlung von Paketdaten vorgesehenen Paketdatensteuerungs- und Paketdatenbearbeitungsknoten erfolgt.

Aus der Fachschrift "Funkshow", 20/99, "IP im Mobilfunk", ist der generelle Aufbau eines GPRS-Mobilfunknetzes bestehend aus insbesondere GPRS-Support Nodes (SGSN) und Gateway-GPRS Support Nodes (GGSN) bekannt. Von einem mobilen Teilnehmer über eine Luftschnittstelle eines Mobilfunknetzes kommende Nutzdaten werden von einem Basisstationskontrollrechner über einen SGSN zu einem GGSN und weiter beispielsweise zu einem öffentlichen paketvermittelten Netz übermittelt. In einem derartigen System hat ein SGSN Kontrollfunktionen (betreffend beispielsweise Nutzermobilität, Nutzerautorisierung, Transportdienstkontrolle, Radio-Subsystemzugriffskontrolle) und Paketdatentransportfunktionen (wie das Umsetzen zwischen den Transporttunneln vom SGSN zum Radio-Subsystem bzw. vom SGSN; Ermittlung des teilnehmerbezogenen Paketdatenvolumens; Vergebührung; Interaktion mit Camel-Knoten; Duplizieren von Paketdaten von überwachten Nutzern). Ein GGSN steuert die Verbindung zwischen einem GPRS-Netzwerk und einem paketdatenorientierten öffentlichen Festnetz. Ein GGSN setzt ferner Datenpakete zwischen einem öffentlichen paketvermittelten Festnetz und einem Transporttunnel vom GGSN zum SGSN um und er mittelt dabei ebenfalls das Datenvolumen zur Vergebührung. Dieser Aufbau wird speziell bei der Bearbeitung von Nutzdaten (insbesondere der Umsetzung, also Übertragung von einem Transporttunnel in einen anderen oder von einem Festnetz in einen Transporttunnel) aufwendig, kostenintensiv sowie nachteilig für die Echtzeitpaketdatenübertragung anzusehen.

Aufgabe der vorliegenden Erfindung ist die Schaffung eines möglichst einfachen und kosteneffizienten, zur Paketdatenvermittlung von für einen Nutzer eines Mobilfunknetzes bestimmten und/oder von diesem kommenden Nutzdaten geeigneten Verfahrens- bzw. Systems. Die Aufgabe wird jeweils durch die Gegenstände der unabhängigen Ansprüche gelöst.

Die Erfindung verringert die Anzahl der erforderlichen Knoten bei der Paketdatenübermittlung von Nutzdaten und optimiert damit die Kosten, die Echtzeitpaketdatenübertragungsfähigkeit. Dabei sind erfindungsgemäße Verfahren bzw. Systeme bzw. Knoten sehr weitgehend abwärts kompatibel zu GPRS- SGSN- und GGSN-Knoten.

Erfindungsgemäß können alle Funktionen eines bisher bekannten SGSN, welche die Bearbeitung von Paketdaten betreffen (wie Vergebührung, Camel-Steuerung, Duplizierung vom datenüberwachten Nutzer) in einen neuen erfindungsgemäß ausbildbaren GGSN verlagert werden. Damit wird erfindungsgemäß ein Paketdatensteuerungknoten cSGSN vorgeschlagen, der nur noch Controller ist, sowie ein (gegenüber einem herkömmlichen GGSN erweiterter) Festnetzschnittstellenknoten xGGSN, der die Datenbearbeitungsfunktionen eines bisher bekannten Paketdatensteuerungs- und Paketdatenbearbeitungsknoten SGSN übernimmt. Die Signalisierung zwischen einem erfindungsgemäßen Paketdatensteuerungsknoten cSGSN und einem erfindungsgemäßen Festnetzschnittstellenknoten xGGSN entspricht mit nur wenigen Änderung der Signalisierung zwischen herkömmlichen Paketdatensteuerungs- und Paketdatenverarbeitungsknoten SGSN und herkömmlichen Festnetzschnittstellenknoten GGSN. Im Gegensatz zu einem herkömmlichen Paketdatensteuerungs- und Paketdatenverarbeitungsknoten SGSN bearbeitet ein erfindungsgemäßer Paketdatensteuerungsknoten cSGSN keine Datenpakete mehr. Die Tunnelung von Datenpaketen kann direkt zwischen dem Radiosystem und einem erfindungsgemäßen Festnetzschnittstellenknoten xGGSN erfolgen. Damit verringert sich der Paketbearbeitungsaufwand für die Nutzdaten und damit die Knoten- und Netzwerkkosten sowie Übertragungszeiten, insbesondere auch aufgrund von Synergieen von bereits auf herkömmlichen Festnetzschnittstellenknoten GGSN angeordneten Datenbearbeitungsfunktionen und durch eine erfindungsgemäße Realisierung dort anordenbaren Datenbearbeitungsfunktionen. Ein erfindungsgemäßer Paketdatensteuerungsknoten cSGSN führt nur noch Kontrollfunktionen aus, muß jedoch keine Kontrolle eines Knotens in Form eines Media Gateway ausführen, auf welchem bei herkömmlicher Realisierung SGSN-Datenbearbeitungsfunktionen ausgelagert sind, da ein solcher dezidierter Knoten erfindungsgemäß nicht mehr notwendig ist, weil ein erfindungsgemäßer Festnetzschnittstellenknoten xGGSN diese Funktionen übernimmt.

Die Erfindung ermöglicht eine Vereinfachung der Netzarchitektur von GSM- oder UMTS-Mobilfunknetzen durch eine Reduzierung von Knoten mit Datenbearbeitungsfunktion in einem Datenpfad von 2 auf 1 Knoten und damit eine Reduzierung der Kosten und der Datenübertragungszeiten. Überdies ist eine Lösung für einen RNC-Wechsel und für Roaming möglich. Schnittstellen zum Radiosystem, zum externen Paketnetz und zu anderen PLMNs bleiben gegenüber der Verwendung herkömmlicher SGSN/GGSN unverändert, so daß eine einfache kostengünstige Implementierung der Erfindung möglich ist. Ferner wird es ermöglicht, die bisher verwendeten zwei Transporttunnel für Daten bei einer Datenübertragung zu einem Transporttunnel mit einer cSGSN-Signalisierungssequenz ermöglicht, die erst eine Tunnelseite teilaktiviert, dann die andere Tunnelseite vollständig aktiviert und zum Abschluß die erste Tunnelseite durch Aktualisierung voll aktiviert.

Weitere Merkmale und Vorteile der Erfindung ergeben sich aus den Ansprüchen und der nachfolgenden Beschreibung eines Ausführungsbeispiels anhand der Zeichnung. Dabei zeigt
- Figur 1: als Blockschaltbild den Einsatz erfindungsgemäßer Verfahren bzw. Knoten,
- Figur 2: den Signalisierungsablauf beim Aktualisieren eines Aufenthaltsgebietes zwischen oder innerhalb cSGSN,
- Figur 3: die Signalisierung beim Aktivieren eines oder weiterer Paketdatendienste auf einem xGGSN,
- Figur 4: die Signalisierung beim Auslösen von Radiotransportdiensten,
- Figur 5: die Signalisierung bei der Reaktivierung von Radiotransportdiensten,
- Figur 6: die Signalisierung für eine Datenübertragung vom xGGSN zu einer NS,
- Figur 7: die Signalisierung beim Aktivieren von Paketdiensten auf einem GGSN,
- Figur 8: die Signalisierung beim Handover bzw. eine Relocation zwischen cSGSN-Knoten innerhalb eines cSGSN-Knoten.

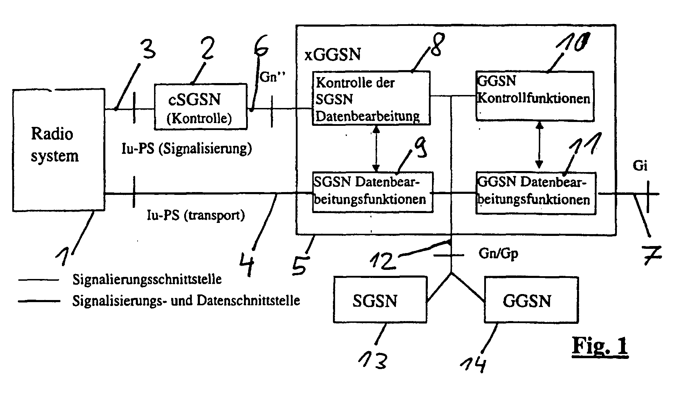

Figur 1 zeigt als Blockschaltbild für das Verständnis der Erfindung relevante Komponenten eines Paketvermittlungsnetzes.

Ein Radiosystem 1 eines Mobilkommunikationsnetzes (beispielsweise GSM- oder UTMS-Netzes) mit bekannten Funktionen und Elementen (Basisstationskontroller, Basisstationen, MSC, MS usw.) ist für die Übertragung von Signalisierungsdaten mit einem Paketdatensteuerungsknoten cSGSN2 über eine Signalisierungsverbindung 3 sowie eine Nutzdatenverbindung 4 zum Übertragen von Nutzdaten (Spardaten, Multimedia-Daten etc.) mit einem Festnetzschnittstellenknoten xGGSN 5 verbunden. Der erfindungsgemäße Paketdatensteuerungsknoten ist zum Übertragung von Signalisierungsdaten zur Steuerung des Festnetzschnittstellenknoten xGGSN 5 mit diesem (5) über eine Signalisierungsschnittstelle Gn" 6 verbunden. Der Festnetzschnittstellenknoten ist über eine Festnetzschnittstelle Gi 7 beispielsweise mit einem PLNM-Netz, Core-Netz eines Mobilfunknetzes oder einem sonstigen Festnetz verbunden. Der Festnetzschnittstellenknoten xGGSN 5 enthält eine Funktion 8 zur Kontrolle einer von einem bisherigen herkömmlichen SGSN (und nun von xGGSN) übernommenen Datenverarbeitung, welche in den Datenbearbeitungsfunktionen 9 des xGGSN enthalten sind. Ferner enthält der erfindungsgemäße Festnetzschnittstellenknoten xGGSN5 auch GGSN-Kontrollfunktionen 10 (welche die Kontrollfunktionen für die Steuerung der von herkömmlichen GGSN ausgeführten GGSN-Datenbearbeitungsfunktionen 11, welche auch im neuen erfindungsgemäßen xGGSN5 enthalten sind, steuert. Somit sind im erfindungsgemäßen xGGSN-Festnetzschnittstellenknoten 5 die Datenbearbeitungsfunktionen von herkömmlichen SGSN (in 9) und die Datenbearbeitungsfunktionen herkömmlicher GGSN (in 11) implementiert (mit den hierfür notwendigen Kontrollfunktionen zur Steuerung dieser Datenbearbeitungsfunktionen innerhalb des xGGSN). Im xGGSN werden somit Funktionen betreffend die Bearbeitung von Paketdaten, welche bisher im SGSN ausgeführt wurden (Verbührung, Camel-Funktionen, Duplizieren von datenüberwachten Benutzern) im neuen xGGSN ausgeführt und implementiert. Der erfindungsgemäße Paketdatensteuerungsknoten cSGSN enthält somit reine Steuerungsfunktionen, während der erfindungsgemäß erweiterte xGGSN-Paketdatenbearbeitungsknoten xGGSN die Datenbearbeitungsfunktionen eines herkömmlichen SGSN ausführt.

Der dargestellte xGGS-Knoten ist abwärtskompatibel zur herkömmlichen SGSN-Knoten und GGSN-Knoten, kann also über eine beispielhaft dargestellte Schnittstelle 12 mit einem SGSN-Knoten 13 herkömmlichen Aufbaus und einem herkömmlichen GGSN-Knoten 14 kommunizieren, ohne daß diese in relevantem Umfang umgebaut werden müßten.

Beim Aufbau sowie bei der Reaktivierung von Radiotransportdiensten verbindet eine cSGSN mittels weniger zusätzlicher Signalisierungsaktionen im Vergleich zu den (von SGSN/GGSN) bekannten Abläufen die Datentransportendpunkte des Radiosystems 1 und des xGGSN5 zu einem durchgehenden Datentransporttunnel (siehe nachfolgende Figuren zu den Signalisierungsabläufen). Die Signalisierung des cSGSN2 gegenüber dem Radiosystem 1 und einer mit dem Radiosystem 1 verbundenen Mobilstation MS bleiben unverändert. Es wird kein zusätzlicher Kontext benötigt, um die bisher verwendeten zwei Datentransporttunnel zu verbinden. Ein Verfahren zur Verbindung zweier bisheriger Datentransporttunnel kann sich in cSGSN-Signalisierungssequenzen befinden, die erst eine Tunnelseite eines Datentransporttunnels auf dem xGGSN5 teilaktivieren, dann die andere Tunnelseite im Radiosystem 1 vollständig aktivieren und zum Schluß die erste Tunnelseite auf den xGGSN mittels Aktualisierung von Parametern vollständig aktivieren.

Für Handover- und Relocation-Prozeduren sind keine zusätzlichen Nachrichten erforderlich. In den bereits spezifizierten Nachrichten und Abläufen werden anstatt Tunnelendpunkten und Transportadressen des SGSN jeweils die Parameter des jeweils anderen Endes des Radiosystem-xGGSN-Transporttunnels 4 angegeben (siehe nachfolgende Signalisierungsabläufe).

Bei einem Handover bzw. einer Relocation von einem erfindungsgemäßen cSGSN zu einem herkömmlichen SGSN verhält sich die erfindungsgemäße Anordnung aus cSGSN und XGGSN während der Prozedur hier in herkömmlicher SGSN.

Bei Handover/Relocation zu einem herkömmlichen SGSN verhält sich die Anordnung aus cSGSN und xGGSN während der Prozedur wie ein herkömmlicher SGSN. Nach der Aktualisierung des(r) Paketdienste(s) auf dem xGGSN verhält dieser sich wie ein herkömmlicher GGSN. Der cSGSN ist dann an diesem(n) Paketdienst(en) nicht mehr beteiligt. Bei einem Handover/Relocation von einem herkömmlichen SGSN zu einem cSGSN werden die Funktionen entsprechend wieder auf cSGSN und xGGSN aufgeteilt.

Sind die Radiotransportdienste ausgelöst (z.B. zur Freigabe von Resourcen im Radiosystem) bleibt der Transportunnel auf dem xGGSN einseitig aufgebaut. Der cSGSN speichert die Datentransportendpunkte und Transportaddressen des xGGSN, was die Reaktivierung der Radiotransportdienste beschleunigt. Der xGGSN markiert den Transporttunnel zum Radiosystem als nicht aufgebaut in seinen Kontexten (z.B. mittels spezieller reservierter Parameter), damit keine Daten dorthin übertragen werden und diese auch nicht vergebührt werden. Der xGGSN speichert für die MS eingehende Daten zwischen oder verwirft diese je nach geforderten Datendienstqualitätsforderungen während er die Reaktivierung der Radiotransportdienste anfordert.

Die Aktivierung des Paketdatendienstes überträgt Camel Parameter vom cSGSN zum xGGSN damit datentransportbezogene CAMEL Funktionen (speziell Prepaid) dort ausgeführt werden können. Die Prozedur zur Aktualisierung der Paketdatendienste wird erweitert, um die datentransportbezogenen CAMEL Funktionen zwischen herkömmlichen SGSN und der Anordnung aus cSGSN und xGGSN zu verschieben wenn aufgrund von Mobilität zwischen solchen in einem Netz gewechselt werden muß. Damit wird das Zusammenspiel mit herkömmlichen SGSN im selben Netz gewährleistet. Diese Verschiebung der CAMEL Funktionen wird mittels der Dienstaktualisierungsnachrichten gesteuert, z.B. anhand der darin enthaltenen Informationselemente und/oder der Protokollversion der Nachrichten. Alternativ können die bisherigen SGSN geändert werden, dass diese die entsprechende CAMEL Funktionalität dem xGGSN überlassen, d.h. diese Funktionenen auf dem SGSN deaktiviert werden, wenn der xGGSN mitteilt, dass er diese übernimmt.

Die dem SGSN vergleichbare Genauigkeit der vom xGGSN ermittelten Volumenvergebührungsinformationen wird gewährleistet, indem die vom Radiosystem an den cSGSN gelieferten Volumeninformationen an den xGGSN weitergeleitet werden.

Die Kompatibilität mit herkömmlichen GGSN im selben Netz oder in fremden Netzen wird erreicht, indem sich der xGGSN den GGSN gegenüber wie ein herkömmlicher SGSN verhält, also alle Datenbearbeitungsfunktionalität eines SGSN ausführt und die Signalisierung eines SGSN gegenüber einem GGSN ausführt. Damit sind weiter alle erforderlichen Datenbearbeitungsfunktionen im besuchten Netz auch wenn ein GGSN in einem anderen Netz benutzt wird.

Unter der Annahme, dass die meisten Paketdatendienste dynamische IP Adressen im besuchten Netz verwenden, weil sich damit optimale Routen für den Datentransport ergeben, kann die Netzwerkarchitektur für den Hauptteil des Datenverkehrs vereinfacht werden.

Die Auswahl des GGSN anhand der Auswertung des Parameters APN, welcher ein logischer Name für spezifische GGSN ist, kann in in der vorgeschlagenen Anordnung im cSGSN oder im xGGSN stattfinden. Bei Auswertung im cSGSN werden nur verschieden netzinterne xGGSN unterschieden auf welchen dann die Datendienstaktivierung erfolgt. Der xGGSN führt dann die bekannte Auswertung mittels DNS durch um einen herkömmlichen GGSN zu aktivieren, wenn er festgestellt hat, dass er nicht selber die GGSN Funktionalität ausführen kann. In einer anderen Ausprägung ist ein xGGSN dem cSGSN fest zugeordnet, mit dem der cSGSN alle Datendienste bereitstellt. Dabei kann der cSGSN auch mehrere fest zugeordnete xGGSN verwenden die in Lastteilung verwendet werden.

Neben einer eigenständigen Serverlösung für den cSGSN sind weitere Ausführungsvarianten möglich:die Integration der cSGSN in RNC, MSC, MSC-Server oder xGGSN, womit die Zahl der Netzknoten weiter verringert werden kann.

Es werden keine Änderungen an den MS oder Radiosystem gefordert, so dass eine Migration in bestehenden Netze möglich ist. Die vorgeschlagene Anordnung ist abwärtskompatibel zu existierenden MS sowie Radiosystemen UTRAN und GERAN.

Im nachfolgenden werden die Signalsierungsabläufe beschrieben, welche für die vorgeschlagene Anordnung gegenüber den bekannten Abläufen modifiziert werden.

### Aktualisieren des Aufenthaltsgebietes zwischen oder innerhalb cSGSN

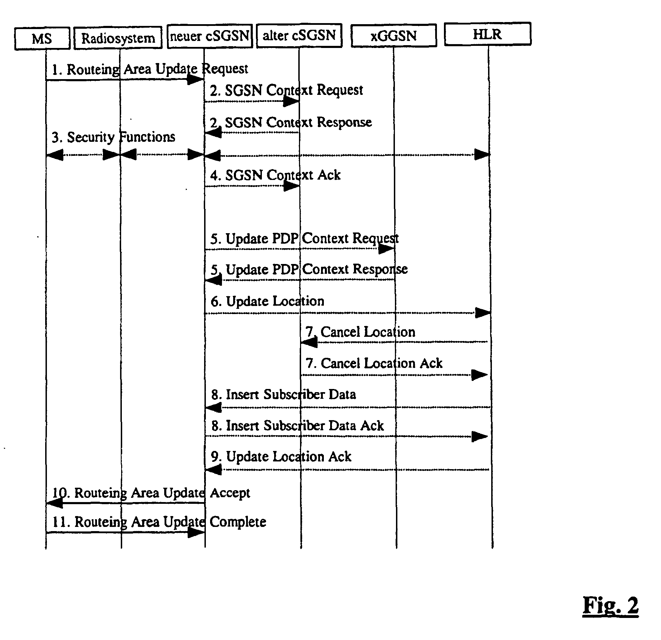

Dies ist ein Signalsierungsablauf der bei Wechsel des Aufenthaltsgebietes ausgeführt wird, solange keine Radiotränsportdienste jedoch Paketdatendienste aktiviert sind. Bei aktivierten Radiotransportdiensten erfolgt der Handover bzw. Relocation Ablauf folgendermaßen:
1) Die MS sendet gemäß Figur 2 eine Anforderung zur Aktualisierung des Aufenthaltsgebietes Routeing Area Update Reques an den neuen cSGSN.
2) Wenn ein Aufenthaltsgebietswechsel zwischen zwei cSGSN stattgefunden hat fordert der neue cSGSN vom alten cSGSN die Kontextinformationen der MS an SGSN Context Request/Response. Wird die Prozedure ohne einen Wechsel des cSGSN ausgeführt entfällt dieser Schritt.
3) An dieser Stelle können Authorisierungen oder andere Sicherheitsmaßnahmen ausgeführt werden.
4) Findet ein Wechsel des cSGSN statt, wird hiermit SGSN Context Acknowledge dem alten cSGSN mitgeteilt, dass alle seine die MS betreffenden Kontexte ungültig sind und bei einer Rückkehr der MS zu diesem cSGSN, z.B. in Fehlerfällen, diese zu mit den entsprechenden Prozeduren zu aktualisieren sind.
5) Wurde der cSGSN gewechselt oder sind aus irgend einem Grund Datendienstparameter zu ändern (z.B. wegen Resourcenmangel) aktualisiert der neue cSGSN den xGGSN Update PDP Context Request/Response. Bei einem cSGSN Wechsel is das wesentliches Ziel der xGGSN Aktualisierung, dem(n) xGGSN(s) die neuen Signalisierungsadressen und Tunnelendpunkte des cSGSN mitzuteilen. Tunnelendpunktidentität und die Datentransportadresse des Radiosystems bleiben weiter als nicht aktiviert markiert in den Kontexten des xGGSN, was vorzugsweise durch spezielle reservierte Werte für diese Informationselemente angezeigt wird.
6) Die Schritte 6) 7) 8) und 9) löschen die MS Informationen im alten cSGSN und aktualisieren die Informationen im HLR wenn der cSGSN gewechselt wurde, wie in den bekannten Abläufen.
7) -
8) -
9) -
10)Der neue cSGSN bestätigt der MS die Aktualisierung Routeing Area Update Accept.
11)Die MS quittiert die Aktualisierung wie bisher Routeing Area Update Complete.

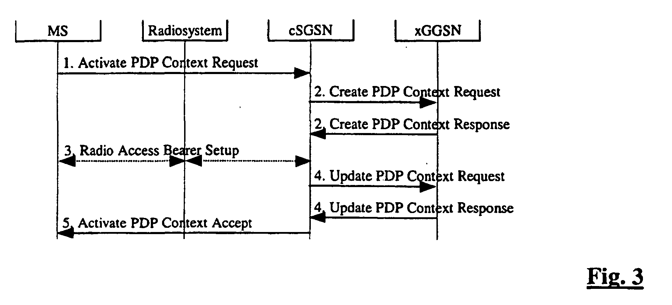

### Aktivieren eines oder weiterer Paketdatendienste auf dem xGGSN (Figur 3)

1) Die MS sendet gemäß Figur 3 eine Anforderung zur Aktivierung eines Paketdatendienstes PDP Context Request.
2) Im Gegensatz zu den bekannten Abläufen wird der Datendienst zunächst auf dem xGGSN aktiviert Create PDP Context Request/Response, um die Tunnelendpunktidentität und die Datentransportadresse des xGGSN zu erhalten, die dem Radiosystem mitgeteilt werden muß. Die Transportadresse sowie die Tunnelendpunktidentität, zu welcher der xGGSN die Datenpakete tunneln soll, ist noch nicht bekannt (erst nach Schritt 3) und wird daher nicht angegeben (z.B. durch spezielle reservierte Werte der Informationselemente) in der Create PDP Context Request Nachricht. Die bisher bekannte Auswahl des GGSN (APN Selection) ist der neuen SGSN/GGSN Funktionsvertilung anzupasssen. Diese erfolgt in einer Ausprägung zweistufig: der cSGSN unterscheidet verschiedene xGGSN (anhand des Parameters APN erhalten vom MS oder vom HLR) und sendet die Nachricht Create PDP Context Request an den ausgewählten xGGSN, um den Datendienst zu aktivieren. Der xGGSN entscheidet wiederum anhand des APN Parameters ob er die GGSN Funktionalität ausführt oder ob ein herkömmlicher GGSN erforderlich ist, wobei der xGGSN sich diesem gegenüber wie ein herkömmlicher SGSN verhält (siehe **Aktivieren von Paketdatendiensten auf GGSN**). In einer zweiten Ausprägung sendet der cSGSN die Nachricht Create PDP Context Request immer an denselben xGGSN, wobei nur dieser den Parameter APN analysiert, um festzustellen ob er die xGGSN Funktionalität ausführt, oder ein herkömmlicher GGSN aktiviert werden muß (siehe **Aktivieren von Paketdatendiensten auf GGSN).** Der cSGSN kann dabei auch mehrere fest zugeordnete xGGSN in Lastteilung nutzen. In der Aktivierungsnachricht teilt der cSGSN dem xGGSN auch alle CAMEL Parameter mit für die vom SGSN auf den xGGSN übergegangenen CAMEL Funktionen.
3) Die Aktivierung des Radiotransportdienstes erfolgt wie bisher bekannt mit der Ausnahme, dass die Tunnelendpunktidentität und die Datentransportadresse nicht wie bisher Parameter vom SGSN sind, sondern die vom xGGSN in Schritt 2) empfangen Tunnelendpunkt und Transportadress Parameter. Das Radiosystem liefert die Tunnelendpunktidentität und die Datentransportadresse für den Datentransport in Richtung zum Radiosystem/MS Radio Access Bearer Setup.
4) Mittels der Aktualisierungsprozedur Update PDP Context Request/Response teilt der cSGSN dem xGGSN Tunnelendpunktidentität und die Datentransportadresse des Radiosystem für den Datentransport in Richtung zum Radiosystem/MS mit. Mit diesem gegenüber den bekannten Prozeduren zusätzlichen Schritt ist der Datentransporttunnel zwischen Radiosystem und xGGSN hergestellt.
5) Der cSGSN bestätigt die Aktivierung mit der Nachricht Activate PDP Context Accept an die MS. Keine Änderungen gegenüber den bekannten Prozeduren. Radiosystem und MS erfordern keine Anpassungen.

Falls ein herkömmlicher SGSN einen Paketdienst auf einem xGGSN aktivieren möchte, dann verhält sich der xGGSN wie ein herkömmlicher GGSN.

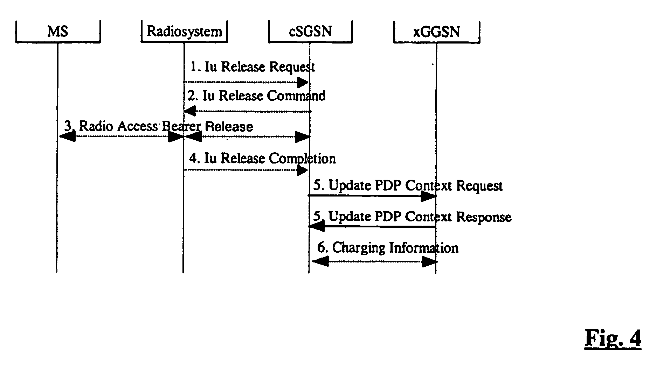

### Auslösen der Radiotransportdienste (Figur 4)

Wenn keine Daten zu übertragen sind, können mittels dieser Prozedur die Radiotransportdienste ausgelöst werden, während die Paketdatendienste aufgebaut bleiben.
1) Das Radiosystem stellt fest, dass die Radiotransportdienste ausgelöst wurden oder ausgelöst werden könnten und sendet gemäß Figur 4 eine Anforderung an den cSGSN Iu Release Request.
2) Folgt der cSGSN dieser Anforderung, fordert er das Radiosystem auf, den Radiotransportdienst auszulösen Iu Release Command.
3) Das Radiosystem löst den (die) Radiotransportdienst(e) aus Radio Access Bearer Release.
4) Das Radiosystem quittiert das Auslösen der (des) Radiotransportdienste(s) Iu Release Completion.
5) Nachdem der (die) Radiotransportdienst(e) ausgelöst wurden, sind die dem xGGSN bekannte Tunnelendpunkt(e) und Transportadresse(n) des Radiosystems nicht mehr gültig. Mittels der bekannten Aktualisierungsprozedur Update PDP Context Request/Response teilt der cSGSN dem xGGSN dies mit, vorteilhaft z.B. durch spezielle reservierte Werte für Tunnelendpunktidentität und Datentransportadresse. Der xGGSN speichert in seinen Kontexten, dass die Datentransporttunnel auf der Radioseite nicht aktiviert sind. Damit kann der xGGSN für die jeweilige MS bestimmte Daten verwerfen und damit nicht vergebühren bzw. speichern bis die Datentransportadressen dem xGGSN mitgeteilt werden wenn der entsprechende Radiotransportdienst reaktiviert wurde. Die Tunnelendpunkte sowie Transportadressen des xGGSN bleiben weiter gültig und werden vom cSGSN gespeichert für die Reaktivierung der Radiotransportdienste.
6) Mit der Bestätigung des Auslösen der Radiotransportdienste wird das Volumen nicht übertragener Daten vom Radiosystem dem cSGSN angezeigt zwecks Korrektur der Vergebührungszähler. Diese Werte werden mittels Charging Information zum xGGSN übertragen, wo sich die Datenvolumenzähler befinden.

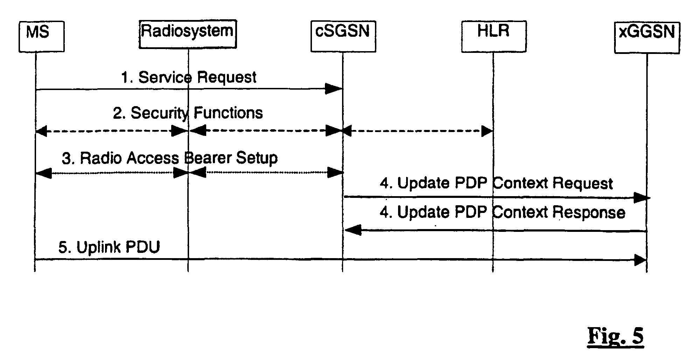

### Reaktivieren der Radiotransportdienste (Figur 5)

Sind die Radiotransportdienste ausgelöst worden und sind neue Daten zu übertragen müssen die Radiotransportdienste reaktiviert werden. Der erste Informationsfluss in Figur 5 zeigt den Fall von anstehenden Daten in der MS. Der zweite Informationsfluss gibt den Ablauf bei im xGGSN zur Übertragung zur MS anstehenden Daten.
1) Die MS hat Daten zum Netz zu senden und sendet gemäß Figur 5 eine Anforderung zur Re-aktivierung der Radiotransportdienste Service Request.
2) An dieser Stelle können Authorisierungen oder andere Sicherheitsmaßnahmen wie in den bisherigen Abläufen ausgeführt werden.
3) Die Aktivierung des Radiotransportdienstes Radio Access Bearer Setup erfolgt wie bisher bekannt mit der Ausnahme, dass die Tunnelendpunktidentität und die Datentransportadresse, welche dem Radiosystem bisher den Tunnelendpunkt auf dem SGSN anzeigten die entsprechenden Parameter des xGGSN sind. Diese hat der cSGSN während der Aktivierung oder Aktualisierung des Datendienstes vom xGGSN empfangen und auch nach Auslösen der Radiotransportdienste gespeichert. Das Radiosystem liefert seinerseits eine neue Tunnelendpunktidentität und eine neue Datentransportadresse pro Radiotransportdienst.
4) Mittels der Aktualisierungsprozedur Update PDP Context Request/Response teilt der cSGSN dem xGGSN die von Radiosystem erhaltenen Parameter Tunnelendpunktidentität und Datentransportadresse für den Datentransport in Richtung zum Radiosystem/MS mit. Mit diesem gegenüber den bekannten Prozeduren zusätzlichen Schritt ist der Datentransporttunnel zwischen Radiosystem/MS und xGGSN wieder hergestellt.
5) Daten, welche in der MS zur Übertragung ins Netz anstehen Uplink PDU, können übertragen werden. Dies ist bereits nach Schritt 3) möglich, da Tunnelendpunktidentität und Datentransportadresse auf dem xGGSN auch bei Auslösen der Radiotransportdienste beibehalten werden.

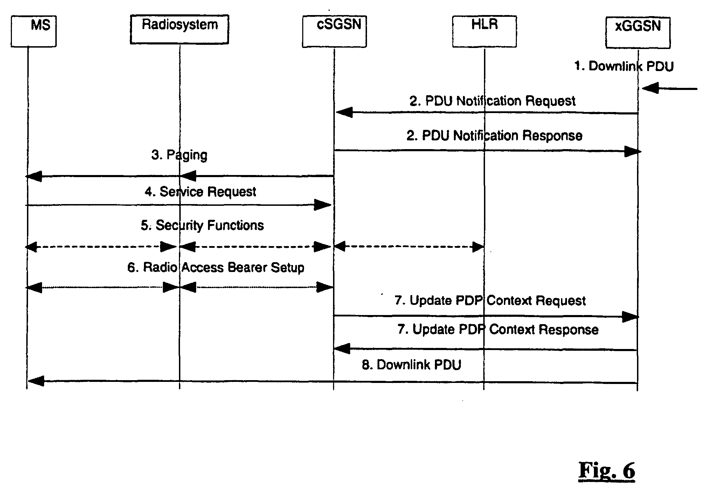

Figur 6 verdeutlicht die Signalisierung für eine Datenübertragung vom xGGSN zu einer NS:
1) Der xGGSN empfängt Daten Downlink PDU , die für eine MS bestimmt sind, deren Radiotransportdienste ausgelöst sind (z.B. im xGGSN Kontext gekennzeichnet durch spezielle reservierte Werte für Tunnelendpunktidentität und Datentransportadresse des Radiosystems).
2) Der xGGSN speichert je nach zugehörigen Datendienstqualitätsforderungen die Daten zwischen oder verwirft diese. Der xGGSN benachrichtigt den cSGSN, um die Radiotransportdienste zu reaktivieren PDU Notification Request/Response.
3) Der cSGSN benachrichtigt die MS mittels Paging wie in den herkömmlichen Abläufen, wo dies der SGSN initiiert nach Empfang von Daten für eine MS.
4) Die MS sendet eine Anforderung zur Reaktivierung der Paketdatendienste oder der Signalisierungsverbindung Service Request.
5) An dieser Stelle können Authorisierungen oder andere Sicherheitsmaßnahmen ausgeführt werden.
6) Die Aktivierung des Radiotransportdienstes Radio Access Bearer Setup erfolgt wie bisher bekannt mit der Ausnahme, dass die Tunnelendpunktidentität und die Datentransportadresse, welche dem Radiosystem bisher den Tunnelendpunkt auf dem SGSN anzeigten die entsprechenden Parameter des xGGSN sind. Diese hat der cSGSN während der Aktivierung oder Aktualisierung des Datendienstes vom xGGSN empfangen und auch nach Auslösen der Radiotransportdienste gespeichert. Das Radiosystem liefert seinerseits eine neue Tunnelendpunktidentität und eine neue Datentransportadresse pro Radiotransportdienst.
7) Mittels der Aktualisierungsprozedur Update PDP Context Request/Response teilt der cSGSN dem xGGSN die von Radiosystem erhaltenen Parameter Tunnelendpunktidentität und Datentransportadresse für den Datentransport in Richtung zum Radiosystem/MS mit. Mit diesem gegenüber den bekannten Prozeduren zusätzlichen Schritt ist der Datentransporttunnel zwischen Radiosystem/MS und xGGSN wieder hergestellt.
8) Daten, welche der xGGSN zur MS übertragen möchte Downlink PDU, können vom xGGSN zum Radiosystem und damit zur MS übertragen werden.

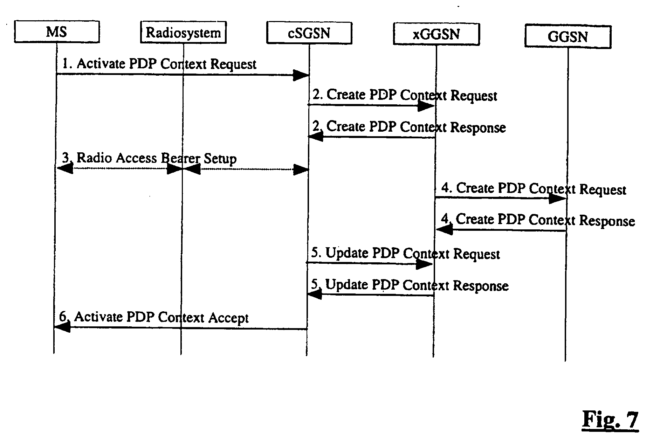

### Aktivieren von Paketdatendiensten auf GGSN gemäß Figur 7:

1) Die MS sendet eine Anforderung zur Aktivierung eines Paketdatendienstes PDP Context Request.
2) Im Gegensatz zu den bekannten Abläufen wird der Datendienst zunächst auf dem xGGSN aktiviert Create PDP Context Request/Response, um die Tunnelendpunktidentität und die Datentransportadresse des xGGSN zu erhalten, die dem Radiosystem mitgeteilt werden muß. Die Transportadressen und Tunnelendpunkte ,an die der xGGSN die Datenpakete tunneln soll, sind noch nicht bekannt (erst nach Schritt 3) und werden daher nicht angegeben (z.B. durch spezielle reservierte Werte der Informationselemente) in der Create PDP Context Request Nachricht. Die bisher bekannte Auswahl des GGSN (APN Selection) ist der neuen SGSN/GGSN Funktionsverteilung anzupasssen. Diese erfolgt in einer Ausprägung zweistufig: der cSGSN unterscheidet verschiedene xGGSN (anhand des Parameters APN erhalten vom MS oder vom HLR) und sendet die Nachricht Create PDP Context Request an den ausgewählten xGGSN, um den Datendienst zu aktivieren. In einer zweiten Ausprägung sendet der cSGSN die Nachricht Create PDP Context Request immer an denselben xGGSN, wobei nur dieser den Parameter APN analysiert. Der cSGSN kann dabei auch mehrere fest zugeordnete xGGSN in Lastteilung nutzen. In beiden Fällen stellt der xGGSN fest, dass der Paketdatendienst auf einem herkömmlichen GGSN zu aktivieren ist. Diesem GGSN gegenüber verhält sich der xGGSN wie ein herkömmlicher SGSN. In der Aktivierungsnachricht teilt der cSGSN dem xGGSN auch alle CAMEL Parameter mit für die vom SGSN auf den xGGSN übergegangenen CAMEL Funktionen.
3) Die Aktivierung des Radiotransportdienstes erfolgt wie bisher bekannt mit der Ausnahme, dass die Tunnelendpunktidentität und die Datentransportadresse nicht wie bisher Parameter vom SGSN sind, sondern die entsprechenden Parameter vom xGGSN empfangen in Schritt 2). Das Radiosystem liefert die Tunnelendpunktidentität und die Datentransportadresse für den Datentransport in Richtung zum Radiosystem/MS Radio Access Bearer Setup.
4) Der xGGSN aktiviert den Paketdatendienst auf dem aus dem APN bestimmten GGSN Create PDP Context Request. Der GGSN bestätight dies mit einer Create PDP Context Response Nachricht. Diesem GGSN gegenüber verhält sich der xGGSN wie ein herkömmlicher SGSN. Es wird ein Datentransporttunnel zwischen xGGSN und GGSN aufgebaut.
5) Mittels der Aktualisierungsprozedur Update PDP Context Request/Response teilt der cSGSN dem xGGSN Tunnelendpunktidentität und die Datentransportadresse des Radiosystem für den Datentransport in Richtung zum Radiosystem/MS mit. Damit ist der Datentransporttunnel zwischen Radiosystem und xGGSN hergestellt. Der xGGSN verbindet die beiden Datentransporttunnel.
6) Der cSGSN bestätigt die Aktivierung des Datendienstes mit der Nachricht Activate PDP Context Accept an die MS.

### Handover bzw. Relocation zwischen cSGSN und innerhalb eines cSGSN

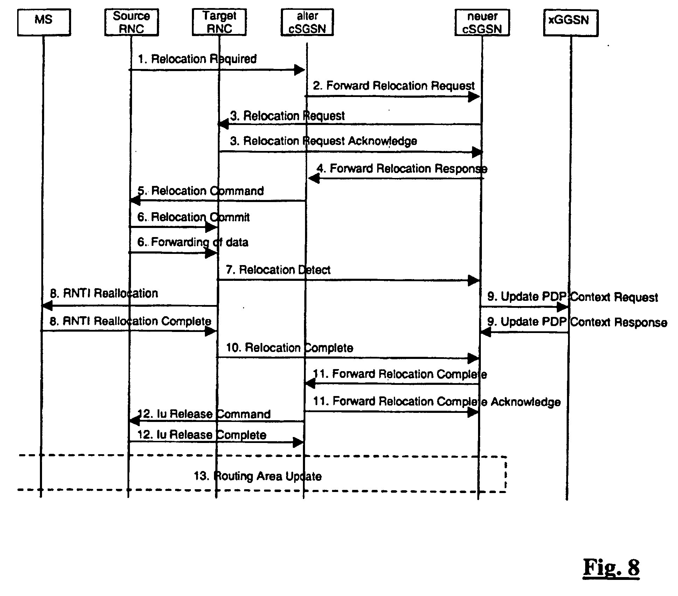

Die Handover und Relocation Prozedur schaltet den Strom der Paketdaten von einer Schnittstelle zwischen Radiosystem und Corenetz zu einer anderen. Bei der Relocation ist der Wechsel der Schnittstelle zwischen MS und Radiosystem bereits vorher erfolgt und beim Handover erfolgt dieser parallel zum Wechsel der anderen Schittstelle. Die beiden Corenetzprozedur unterscheiden sich nur in Einzelheiten, die nicht die Einführung des cSGSN und xGGSN betreffen, so dass exemplarisch nur der Relocation Fall dargestellt wird. Bei Handover oder Relocation innerhalb eines cSGSN entfallen die zwischen den beiden cSGSN dargestellten Signalisierungen.
1) Der gegenwärtige Radiosystemkontroller Source RNC entscheidet ein Relocation zu initieren und sendet die gemäß Figur 8 eine Nachricht Relocation Required an den alten cSGSN.
2) Der alte cSGSN ermittelt aus dem Ziel der Relocation den neuen cSGSN und übermittelt diesem alle zur MS gehörigen Parameterkontexte mit der MS Forward Relocation Request.
3) Der neue cSGSN übermittelt dem neuen Radiosystemkontroller Target RNC alle Parameter der erforderlichen Radiotransportdienste Relocation Request wie in den bekannten Abläufen mit dem Unterschied, dass Tunnelendpunktidentität und Datentransportadresse an welche das Radiosystem von der MS empfangene Daten überträgt die des xGGSN sind statt des SGSN wie bisher. Der neue Radiosystemkontroller quittiert die erfolgreiche Vorbereitung der Radiotransportdienste Relocation Request Acknowledge.
4) Der neue cSGSN teilt dem alten cSGSN die erfolgreiche Vorbereitung der Radiotransportdienste durch den neuen Radiosystemkontroller und neuen cSGSN mit Forward Relocation Response.
5) Der alte cSGSN fordert den alten Radiosystemkontroller Source RNC auf, die Relocation durchzuführen Relocation Command.
6) Der alte Radiosystemkontroller Source RNC fordert den neuen Radiosystemkontroller auf die Kontrolle zu übernehmen Relocation Commit. (Im Falle der Handoverprozedur ist diese Aufforderung, welche auch Parameter übermittelt, aufgeteilt auf Nachrichten die die cSGSN an den neuen Radiosystemkontroller übermittelt werden sowie auf Nachrichten der MS) und beginnt Daten, welche zur MS gesendet werden sollen, an den neuen Radiosystemkontroller Target RNC weiterzuleiten Forwarding of Data.
7) Wenn der neue Radiosystemkontroller die Aufforderung zur Relocation erhalten hat, meldet er dies an den neuen cSGSN Relocation Detect.
8) Der neue Radiosystemkontroller tauscht mit der MS neue Radiosystemparameter aus RNTI Reallocation / RNTI Reallocation Complete.
9) Wenn der neue cSGSN die Nachricht Relocation Detect empfängt, werden die Parameter im xGGSN aktualisiert wie in den bekannten Abläufen Update PDP Context Request / Response mit dem Unterschied, dass Tunnelendpunktidentität und Datentransportadresse an welche der xGGSN Daten zur MS zu übertragen hat die vom Radiosystem sind statt des SGSN wie bisher.
10) Wenn die Radiotransportdienste zwischen neuem RNC und MS aktualisiert sind, teilt dies der neue RNC dem neuen cSGSN mit Relocation Complete.
11) Der neue cSGSN teilt dies dem alten cSGSN mit, was dieser bestätigt Forward Relocation Complete / Forward Relocation Complete Acknowledge.
12) Der alte cSGSN löst die Radiotransportdienste aus.
13) Wenn sich das Aufenthaltsgebiet der MS anhand der Informationen des Radiosystems geändert hat, wird eine Aktualisierung durchgeführt.

### CAMEL

Für die Behandlung von CAMEL ergeben sich Änderungen. Entsprechend der Aufteilung von Steuerung (cSGSN) und Tranport (xGGSN) wird CAMEL auch separiert. Alle Signalisierungstrigger verbleiben im cSGSN. Alle Trigger bezüglich Datenvolumen insbesondere die PrePaid-Behandlung werden im xGGSN abgearbeitet. Aus dieser Aufteilung ergibt sich eine neue Schnittstelle. Momentan gibt es im Standard nur eine Schnittstelle zwischen SGSN und SCP für CAMEL. In der vorgestellten Systemarchitektur ergibt sich eine neue Schnittstelle zum xGGSN. Diese Schnittstelle könnte ähnlich der Gc Schnittstelle zwei Implementierungsvarianten haben. Bei der ersten Möglichkeit würden der SCP und der xGGSN direkt verbunden. Als Alternative würde der cSGSN als Relay zwischen SCP und xGGSN dienen. Bei der zweiten Variante würde der xGGSN keine eigene SS7 Schnittstelle benötigen.

Bei einem Wechsel von einem cSGSN und zu einem herkömmlichen SGSN werden wie gehabt alle Informationen vom cSGSN zum herkömmlichen SGSN übergeben. Die vom SGSN übernommene CAMEL Funktionalität des xGGSN muß beendet werden, da der neue SGSN diese nach dem Wechsel ausführt. Vorteilhaft ermittelt der xGGSN die Beendigung seiner CAMEL Funktionalität aus der Datendienst Aktualisierungsnachricht.

Entsprechend läuft der Wechsel in umgekehrter Richtung ab. Die Aktualisierungsnachricht vom neuen cSGSN zum xGGSN teilt alle notwendigen CAMEL Parameter mit, dass der xGGSN diese Funktionalität aufnehmen kann.

Ein Problem bei diesen Wechseln ist die Tatsache, daß die CAMEL-Funktionalität im herkömmlichen Netz nur im SGSN beheimatet ist und in der neuen vorgestellten Architektur zwischen cSGSN und xGGSN aufgeteilt ist. Daraus ergibt sich die Anforderung, daß der xGGSN je nach dem, ob er mit einem cSGSN oder einem herkömmlichen SGSN verbunden ist, entsprechend die CAMEL-Funktionalität ein- oder ausschaltet. Dieses Ein- oder Ausschalten wird entsprechend der erhaltenen Update PDP Context Request Nachricht gesteuert anhand der darin enthaltenen Informationselemente und/oder der Protokollversion der Nachrichten.

Alternativ können die bisherigen SGSN geändert werden, dass diese die entsprechende CAMEL Funktionalität dem xGGSN überlassen, d.h. diese Funktionen deaktivieren, wenn der xGGSN mitteilt, dass er diese CAMEL Funktionen übernimmt.

Die Prozedur zur Aktualisierung der Paketdatendienste wird erweitert, um die datentransportbezogenen IN/CAMEL-Funktionen zwischen herkömmlichen Paketdatensteuerungs- und Paketdatenbearbeitungsknoten (SGSN) und der Anordnung aus Paketdatensteuerungsknoten (cSGSN) und Festnetzschnittstellenknoten (xGGSN) zu verschieben wenn aufgrund von Mobilität zwischen solchen in einem Netz gewechselt werden muß. Damit wird das Zusammenspiel mit herkömmlichen Paketdatensteuerungs- und Paketdatenbearbeitungsknoten (SGSN) im selben Netz gewährleistet.

## Patentansprüche

1. Verfahren zum Übertragen von Sprachdaten oder Multimediadaten oder anderen Nutzdaten als Paketdaten in einem GSM/GPRS/UMTS Mobilfunknetz, der zumindest einen xGGSN (5), der als GGSN (14) mit den Datenbearbeitungsfunktionen eines SGSN (13) definiert ist, und einen cSGSN(2), der als SGSN mit nur der Signalisierungskontrollerfunktionalität eines SGSN definiert ist, enthält, wobei die Übertragung von Paketdaten zwischen zumindest einigen xGGSN-Knoten ohne Zwischenschaltung von SGSN-Knoten erfolgt, **dadurch gekennzeichnet, daß** zur Erreichung von Kompatibilität mit GGSN-Knoten im selben Netz oder in fremden Netzen der xGGSN die Signalisierung eines SGSN gegenüber einem GGSN ausführt.

2. Verfahren nach Anspruch 1,
**dadurch gekennzeichnet, daß**
zur Übertragung von Nutzdaten ein tunneling direkt zwischen Komponenten des Radiosubsystems des GSM/GPRS/UMS-netzes und einem Festnetzschnittstellenknoten (xGGSN) erfolgt.

3. Verfahren nach Anspruch 2,
**dadurch gekennzeichnet, daß**
ein Aufbau eines Tunnels für ein tunneling mittels Signalisierungssequenzen von cSGSN-Knoten erfolgt, welche erst eine Tunnelseite teilaktivieren, dann die andere Tunnelseite vollständig aktivieren und dann die erste Tunnelseite durch Aktualisierung voll aktivieren, wobei der cSGSN die Tunnelparameter zwischen beiden Seiten vermittelt.

4. Verfahren nach einem der vorhergehenden Ansprüche,
**dadurch gekennzeichnet, daß**
im Festnetz eine Internetprotokoll - Übertragung von Nutzdaten erfolgt.

5. Verfahren nach einem der vorhergehenden Ansprüche,
**dadurch gekennzeichnet, daß**
alle Funktionen, welche die Bearbeitung der Paketdaten betreffen ausschließlich in xGGSN-Knoten ablaufen.

6. Verfahren nach einem der vorhergehenden Ansprüche,
**dadurch gekennzeichnet, daß**
die vom Radiosystem an den cSGSN-Knoten gelieferten Volumeninformationen an den xGGSN-Knoten weitergeleitet werden.

7. Verfahren nach einem der vorhergehenden Ansprüche,
**dadurch gekennzeichnet, daß**
dann, wenn bei einem bestehenden Datendienst die Radiotransportdienste zur Übertragung von Nutzdaten ausgelöst sind, ein Transporttunnel auf dem xGGSN einseitig aufgebaut bleibt, wobei Datentransportendpunkte und Transportadressen des xGGSN erhalten bleiben.

8. Verfahren nach einem der vorhergehenden Ansprüche,
**dadurch gekennzeichnet, daß**
ein cSGSN die Datentransportendpunkte und Transportadressen eines xGGSN zur Beschleunigung der Reaktivierung von Radiotransportdiensten zur Übertragung von Nutzdaten zusammen mit den anderen Datendienstparametern speichert.

9. Verfahren nach einem der vorhergehenden Ansprüche,
**dadurch gekennzeichnet, daß**
ein xGGSN, die Reaktivierung von Radiotransportdiensten anfordert im Falle von für ein zugeordnetes Mobilfunkendgerät ankommenden Daten und diese eingehenden Daten je nach geforderten Datendienstqualitätsforderungen zwischenspeichert oder diese verwirft.

10. Verfahren nach einem der vorhergehenden Ansprüche,
**dadurch gekennzeichnet, daß**
bei Wechsel des SGSN oder cSGSN (Handover und Relocation Prozeduren) keine zusätzlichen Nachrichten erforderlich sind und in den bereits spezifizierten Nachrichten und Abläufen statt Tunnelendpunkten und Transportadressen des SGSN-oder CSGN-Knoten jeweils die Parameter des jeweils anderen Endes des Radiosystem - xGGSN Transporttunnels angegeben werden.

11. Verfahren nach einem der vorhergehenden Ansprüche,
**dadurch gekennzeichnet, daß**
bei einem Wechsel (Handover/Relocation) des cSGSN zu einem SGSN-Knoten sich die Anordnung aus cSGSN und xGGSN während der Prozedur wie ein SGSN verhält und nach der Aktualisierung des Paketdienstes auf dem xGGSN dieser sich wie ein GGSN verhält, ein Paketdatensteuerungsknoten dann an diesem Paketdienst nicht mehr beteiligt ist und bei einem Wechsel (Handover/Relocation) von einem SGSN zu einem cSGSN die Funktionen entsprechend wieder auf cSGSN-Knoten und xGGSN-Knoten aufgeteilt werden.

12. Verfahren nach einem der vorhergehenden Ansprüche,
**dadurch gekennzeichnet, daß**
bei Aktivierung des Paketdatendienstes IN/CAMEL-Parameter vom cSGSN zum xGGSN übertragen werden, damit datentransportbezogene IN/CAMEL-Funktionen dort ausgeführt werden können.

13. Verfahren nach einem der vorhergehenden Ansprüche,
**dadurch gekennzeichnet, daß**
die Auswahl des GGSN in der ordnung im cSGSN oder im xGGSN stattfinden kann und bei Auswertung im cSGSN nur verschiedene netzinterne xGGSN-Knoten unterschieden werden auf welchen dann die Datendienstaktivierung erfolgt, der xGGSN dann die bekannte Auswahl durch führt, um einen GGSN zu aktivieren, wenn er festgestellt hat, dass er nicht selber die GGSN Funktionalität ausführen kann.

14. Verfahren nach einem der vorhergehenden Ansprüche,
**dadurch gekennzeichnet, daß**
ein xGGSN dem cSGSN fest zugeordnet ist, mit dem der cSGSN-Knoten alle Datendienste bereitstellt, wobei der cSGSN auch mehrere fest zugeordnete xGGSN verwenden kann die in Lastteilung verwendet werden können.

15. Verfahren nach einem der vorhergehenden Ansprüche,
**dadurch gekennzeichnet, daß**
neben oder anstatt einer eigenständigen Serverlösung für den cSGSN die Integration der cSGSN im Radiosystem (1) Sprachvermittlungsknoten (MSC, MSC-Server) oder xGGSN vorgesehen ist, womit die Zahl der Netzknoten weiter verringert werden kann.

16. GSM/GPRS/UMTS Mobilfunknetz zur Übertragung von Sprachdaten oder Multimediadaten oder anderen Nutzdaten als Paketdaten; das SGSN-, GGSN-, xGGSN-, cSGSN- Knoten enthält, die zur Durchführung des Verfahrens nach einem der vorhergehenden Ansprüche ausgebildet sind.

17. xGGSN-Knoten oder cSGSN-Knoten , der zur Durchführung des Verfahrens nach einem der vorhergehenden Ansprüche 1-15 ausgebildet ist.

## Claims

1. Method for transmitting voice data or multimedia data or other useful data as packet data in a GSM/GPRS/UMTS mobile radio network which comprises at least one xGGSN (5), which is defined as a GGSN (14) with the data processing functions of an SGSN (13), and one cSGSN (2), which is defined as an SGSN with only the signalling controller functionality of an SGSN, whereby the packet data is transmitted between at least several xGGSN nodes without the interposition of SGSN nodes, **characterised in that** to achieve compatibility with GGSN nodes in the same network or in external networks the xGGSN implements the signalling of an SGSN in respect of a GGSN.

2. Method according to Claim 1,
**characterised in that**
tunnelling takes place directly between components of the radio subsystem of the GSM/GPRS/UMTS network and a fixed network interface node (xGGSN) in order to transmit useful data.

3. Method according to Claim 2,
**characterised in that**
a tunnel is set up for tunnelling by means of signalling sequences from cSGSN nodes, which first partly activate one side of the tunnel, then fully activate the other side of the tunnel and then fully activate the first side of the tunnel by means of an update operation, whereby the cSGSN switches the tunnel parameters between the two sides.

4. Method according to one of the preceding Claims,
**characterised in that**
an internet protocol transmission of useful data takes place in the fixed network.

5. Method according to one of the preceding Claims,
**characterised in that**
all functions relating to the processing of the packet data operate solely in xGGSN nodes.

6. Method according to one of the preceding Claims,
**characterised in that**
the volume information supplied by the radio system to the cSGSN node is forwarded to the xGGSN node.

7. Method according to one of the preceding Claims,
**characterised in that**
if with an existing data service the radio transport services are released to transmit useful data, a transport tunnel remains set up on one side of the xGGSN, whereby data transport end points and transport addresses of the xGGSN are maintained.

8. Method according to one of the preceding Claims,
**characterised in that**
a cSGSN stores the data transport end points and transport addresses of an xGGSN to accelerate the reactivation of radio transport services to transmit useful data together with the other data service parameters.

9. Method according to one of the preceding Claims,
**characterised in that**
an xGGSN requests reactivation of radio transport services in the event of data arriving for an assigned mobile radio terminal and buffers this incoming data on a temporary basis or discards it depending on the data service quality requirements specified.

10. Method according to one of the preceding Claims,
**characterised in that**
in the event of a change of SGSN or cSGSN (handover and relocation procedures) no additional messages are necessary and the parameters of the respective other ends of the radio system - xGGSN transport tunnel in each instance are specified in the already specified messages and sequences instead of tunnel end points and transport addresses of the SGSN or cSGSN node.

11. Method according to one of the preceding Claims,
**characterised in that**
in the event of a change (handover/relocation) of the cSGSN to an SGSN node the arrangement comprising cSGSN and xGGSN responds during the procedure in the same way as an SGSN and after the packet service has been updated on the xGGSN this latter responds in the same way as a GGSN, a packet data control node is then no longer involved in this packet service and in the event of a change (handover/relocation) from an SGSN to a cSGSN the functions are again allocated correspondingly to cSGSN nodes and xGGSN nodes.

12. Method according to one of the preceding Claims,
**characterised in that**
on activation of the packet data service IN/CAMEL parameters are transmitted from the cSGSN to the xGGSN, so that data transport-related IN/CAMEL functions can be implemented there.

13. Method according to one of the preceding Claims,
**characterised in that**
selection of the GGSN can take place in the cSGSN or in the xGGSN and during evaluation in the cSGSN only various network-internal xGGSN nodes are differentiated, on which data service activation then takes place, the xGGSN then implements the known selection to activate a GGSN when it has determined that it cannot implement the GGSN functionality itself.

14. Method according to one of the preceding Claims,
**characterised in that**
an xGGSN is permanently assigned to the cSGSN, with which the cSGSN node provides all data services, whereby the cSGSN can also use a plurality of permanently assigned xGGSNs, which can be used in load-sharing mode.

15. Method according to one of the preceding Claims,
**characterised in that**
in addition to or instead of an independent server solution for the cSGSN, integration of the cSGSN in the radio system (1), voice switching node (MSC, MSC server) or xGGSN is provided, with the result that the number of network nodes can be reduced further.

16. GSM/GPRS/UMTS mobile radio network for the transmission of voice data or multimedia data or other useful data as packet data, comprising SGSN, GGSN, xGGSN, cSGSN nodes which are configured to implement the method according to one of the preceding Claims.

17. xGGSN node or cSGSN node which is configured to implement the method according to one of the preceding Claims 1-15.

## Revendications

1. Procédé pour la transmission en paquets de données vocales ou multimédia ou d'autres données utiles dans un réseau de téléphonie mobile GSM/GPRS/UMTS, qui contient au moins un xGGSN (5), qui est défini comme GGSN (14) avec les fonctions de traitement de données d'un SGSN (13), et un cSGSN (2), qui est défini comme SGSN avec uniquement la fonction de contrôleur de signalisation d'un SGSN, la transmission de données en paquets entre au moins un certain nombre de noeuds xGGSN s'effectuant sans intercaler de noeuds SGSN, **caractérisé en ce que** le xGGSN effectue la signalisation d'un SGSN vis-à-vis d'un GGSN pour obtenir la compatibilité avec des noeuds GGSN dans le même réseau ou dans des réseaux étrangers.

2. Procédé selon la revendication 1, **caractérisé en ce que** pour la transmission de données utiles un tunnelage s'effectue directement entre des composants du sous-système radio du réseau GSM/GPRS/UMTS et un noeud d'interface de réseau fixe (xGGSN).

3. Procédé selon la revendication 2, **caractérisé en ce qu'**un tunnel est établi pour un tunnelage par des séquences de signalisation de noeuds cSGSN, qui commencent par activer en partie un côté du tunnel, puis activent en totalité l'autre côté du tunnel pour ensuite activer pleinement le premier côté du tunnel par actualisation, le cSGSN communiquant les paramètres du tunnel entre les deux côtés.

4. Procédé selon l'une des revendications précédentes, **caractérisé en ce que** des données utiles sont transmises par un protocole Internet dans le réseau fixe.

5. Procédé selon l'une des revendications précédentes, **caractérisé en ce que** toutes les fonctions qui concernent le traitement des données en paquets se déroulent exclusivement dans des noeuds xGGSN.

6. Procédé selon l'une des revendications précédentes, **caractérisé en ce que** les informations volumétriques livrées au noeud cSGSN par le système radio sont transmises au noeud xGGSN.

7. Procédé selon l'une des revendications précédentes, **caractérisé en ce que** ensuite lorsque pour un service de données existant les services de transport radio pour la transmission de données utiles sont déclenchés, un tunnel de transport reste établi unilatéralement sur le xGGSN, les points finaux de transport des données et les adresses de transport du xGGSN étant conservées.

8. Procédé selon l'une des revendications précédentes, **caractérisé en ce qu'**un cSGSN mémorise les points finaux de transport de données et les adresses de transport d'un xGGSN pour accélérer la réactivation de services de transport radio pour la transmission de données utiles conjointement avec d'autres paramètres du service de données.

9. Procédé selon l'une des revendications précédentes, **caractérisé en ce qu'**un xGGSN demande la réactivation de services de transport radio dans le cas de données arrivant pour un terminal de téléphonie mobile correspondant et qu'il stocke en mémoire temporaire ces données reçues en fonction des exigences de qualité demandées du service de données ou les rejette.

10. Procédé selon l'une des revendications précédentes, **caractérisé en ce qu'**en cas de changement du SGSN ou du cSGSN (procédures Handover et Relocation) aucun message supplémentaire n'est nécessaire et **en ce que** dans les messages et opérations déjà spécifiés ce sont les paramètres de l'autre extrémité respective du tunnel de transport xGGSN du système radio qui sont indiqués au lieu des points finaux de tunnel et des adresses de transport du SGSN ou du noeud cSGSN.

11. Procédé selon l'une des revendications précédentes **caractérisé en ce qu'**en cas de changement (Handover/Relocation) du cSGSN à un noeud SGSN, le dispositif composé du cSGSN et du xGGSN se comporte pendant la procédure comme un SGSN et que celui-ci se comporte comme un GGSN après l'actualisation du service de paquets sur le xGGSN, un noeud de commande de données en paquets ne participe ensuite plus à ce service en paquets et en cas de changement (Handover/Relocation) d'un SGSN à un cSGSN, les fonctions sont à nouveau réparties de manière correspondante entre des noeuds cSGSN et xGGSN.

12. Procédé selon l'une des revendications précédentes, **caractérisé en ce que** lors de l'activation des services de données en paquets des paramètres IN/CAMEL sont transmis du cSGSN au xGGSN, afin que des fonctions IN/CAMEL relatives au transport de données puissent y être exécutées.

13. Procédé selon l'une des revendications précédentes, **caractérisé en ce que** la sélection du GGSN peut s'effectuer dans l'ordre dans le cSGSN ou le xGGSN et que lors de l'évaluation dans le cSGSN seuls différents noeuds xGGSN internes au réseau sont différenciés sur lesquels l'activation des services de données s'effectue alors, le xGGSN effectuant ensuite la sélection connue, afin d'activer un GGSN, lorsqu'il a constaté qu'il n'est plus à même d'exécuter lui-même la fonction GGSN.

14. Procédé selon l'une des revendications précédentes, **caractérisé en ce que** un xGGSN est affecté fixement au cSGSN, avec lequel le noeud cSGSN fournit tous les services de données, le cSGSN pouvant également utiliser plusieurs xGGSN affectés fixement, qui peuvent être employés en partage de charge.

15. Procédé selon l'une des revendications précédentes, **caractérisé en ce que** à côté ou au lieu d'une solution serveur autonome pour le cSGSN, l'intégration des cSGSN dans le système radio (1), les noeuds de commutation vocale (MSC, serveur MSC) ou xGGSN est prévue, ce qui permet de réduire encore le nombre de noeuds du réseau.

16. Réseau de téléphonie mobile GSM/GPRS/UMTS pour la transmission en paquets de données vocales ou de données multimédia ou d'autres données utiles, qui contient des noeuds SGSN, GGSN, xGGSN, cSGSN, conçus pour la mise en oeuvre du procédé selon l'une des revendications précédentes.

17. Noeuds xGGSN ou cSGSN, conçus pour la mise en oeuvre du procédé selon l'une des revendications précédentes 1 à 15.
